(19) Europäisches Patentamt
European Patent Office
Office européen des brevets

(11) Publication number: **0 044 214**
**B1**

(12) **EUROPEAN PATENT SPECIFICATION**

(45) Date of publication of patent specification: **04.09.85**

(21) Application number: **81303181.2**

(22) Date of filing: **10.07.81**

(51) Int. Cl.⁴: **C 07 F 9/165,** C 07 F 9/40, C 07 F 9/24, C 07 F 9/58, A 01 N 57/10, A 01 N 57/18, A 01 N 57/26

(54) **Novel phosphorous esters of cyanohydrins, pesticidal compositions including same, and methods of controlling pests using same.**

(30) Priority: **16.07.80 US 169284**

(43) Date of publication of application: **20.01.82 Bulletin 82/03**

(45) Publication of the grant of the patent: **04.09.85 Bulletin 85/36**

(84) Designated Contracting States: **AT BE CH DE FR GB IT LI NL SE**

(56) References cited:
**DE-B-1 047 776**
**US-A-2 494 284**
**US-A-2 965 533**

**JOURNAL OF GENERAL CHEMISTRY OF THE USSR, vol. 45, no. 11, part 1, 20th April 1976, pages 2369-2371 V.E. SHISHKIN et al.: "Alkyl and aryl cyanoalkyl methylphosphonates"**

**The file contains technical information submitted after the application was filed and not included in this specification**

(73) Proprietor: **UNION CARBIDE CORPORATION**
**Old Ridgebury Road**
**Danbury Connecticut 06817 (US)**

(72) Inventor: **Hodakowski, Leonard Edward**
**2316 South Walnut Drive**
**St. Albans(25177) West Virginia (US)**
Inventor: **Ayad, Hafez Mohammed**
**5371 Big Tyler Road Apt. 713**
**Charleston West Virginia (US)**

(74) Representative: **Baverstock, Michael George Douglas et al**
**BOULT, WADE & TENNANT 27 Furnival Street**
**London, EC4A 1PQ (GB)**

(56) References cited:
**CHEMICAL ABSTRACTS, vol. 69, no. 17, 21st October 1968, page 6310, no. 67489j Columbus, Ohio, U.S.A. A.N. PUDOVIK et al.: "Reaction of phosphonic and phosphinic acid esters with the nitriles of alpha-keto carboxylic acids"**
**DERWENT JAPANESE PATENTS, Section Chemical, Derwent Publications Ltd., week 14-03-1968 -19-03-1968 vol. 7, no. 11, Section 5, page 8**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 044 214 B1**

Courier Press, Leamington Spa, England.

**Description**

This invention relates to novel phosphorous esters of cyanohydrins. This invention is also directed to a pesticidal composition comprising an acceptable carrier and a pesticidally effective amount of a compound of this invention, as well as to a method of controlling pests which comprises subjecting the pests to a pesticidally effective amount of a compound of this invention.

Certain phosphate esters of cyanohydrins are disclosed in U.S—A—2,965,533, which issued on December 20, 1960 and which is assigned to Shell Oil Company. The phosphates disclosed in this patent are based on the diethyl chlorophosphate moiety:

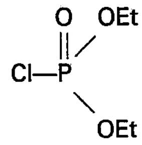

A

As an example, the patentee reacts acetone cyanohydrin with A to yield Diethyl 1-cyano-1-methyl ethyl phosphate as shown below.

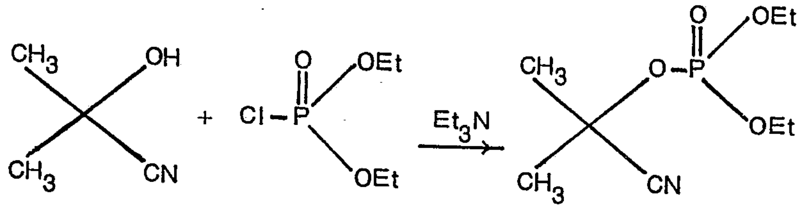


A

Other phosphates are disclosed in DE—A—1047776 in which only O, O substituents appear on the phosphorous moiety.

It has been found that changes in the substituents on the phosphorous "head" can significantly alter the biological properties of the compound. For example, merely because these known di-oxy phosphates have pesticidal activity it does not follow that all materials modified with the —(X)P(OR)$SR_1$ group will also show activity.

For example tetraethyl pyrophosphate (TEPP) has been a commercial product that was found to be extremely effective against the active stages of mites and other soft-bodied insects. By contrast the O-ethyl-S-n-propyl analog was found to be inactive.

According to the present invention one of the O-ethyl groups is replaced by an S-n-propyl group which unexpectedly increases the broad spectrum pesticidal activity particularly over the compounds disclosed in US—A—2,965,533.

In addition to this, the cyanohydrin phosphates disclosed in this invention have unexpectedly good fumigant, systemic and nematocidal activity while possessing relatively safe mammalian toxicity.

The novel compounds are represented by the following generic formula:

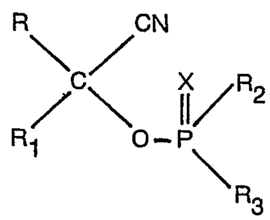

wherein X is O or S;

R and $R_1$ are the same or different and are independently hydrogen, $C_1$—$C_{15}$ alkyl, whereby $C_3$—$C_{15}$ can be branched or unbranched, and wherein the alkyl group can be substituted with alkylthio, alkoxy, one or more halo; $C_3$—$C_8$ cycloalkyl, alkenyl, phenyl, benzyl, pyridinyl, pyrimidinyl, furyl, pyranyl, naphthyl, or thienyl, all of which may be optionally substituted with one or more halogen, nitro cyano, allyloxy, trihalomethyl, alkyl, alkylthio, alkoxy, aryloxy, or aryloxyalkyl, which can be further substituted with alkoxy, halogen, alkyl, or trihalomethyl groups; or taken together R and $R_1$ may form a 5 or 6 membered carbocyclic ring.

$R_2$ and $R_3$ can be the same or different and are independently: $C_1$—$C_8$ alkylthio, $C_1$—$C_8$ alkoxy, with the proviso that $R_2$ and $R_3$ may not be alkoxy at the same time, or $C_1$—$C_8$ alkylamino.

Compositions falling within the above generic formula exhibit biological activity as pesticides to a

greater or lesser extent. Some exhibit very powerful activity in extremely small dosages while others require larger dosages to be effective.

In general, the compounds which are preferred for pesticidal activity are those of the above generic formula wherein:

X is O;

R and $R_1$ are the same or different and are independently hydrogen, $C_1$—$C_6$ alkyl, phenyl substituted with aryloxy, which aryloxy group is further substituted with halogen; and

$R_2$ and $R_3$ can be the same or different and are independently $C_1$—$C_8$ alkylthio and $C_1$—$C_8$ alkoxy, with the proviso that $R_2$ and $R_3$ may not be alkoxy at the same time.

Compounds which are most preferred are represented by nomenclature and structure as follows:

| Nomenclature | Structure |
| --- | --- |
| O-(α-Cyanobenzyl)-O-ethyl-S-n-propylthiophosphate | 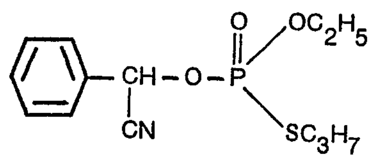 |
| O-(2-Cyano-2-propyl)-O-ethyl-S-n-propylthiophosphate | 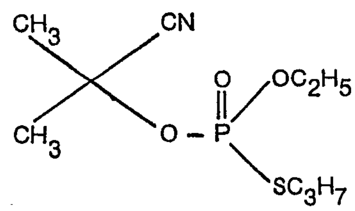 |
| O-(2-Methyl-1-cyanopropyl)-O-ethyl-S-propylthiophosphate | 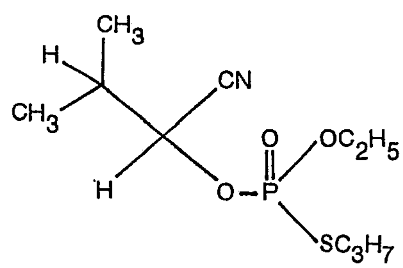 |
| O-(α-Cyano-3-[2',4'-dichlorophenoxy]-benzyl)-O-ethyl-S-n-propylthiophosphate | 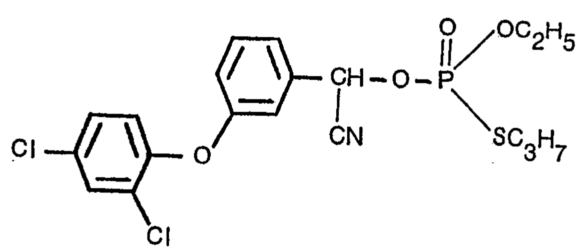 |
| O-(1-Cyanoethyl)-O-ethyl-S-propylthiophosphate | 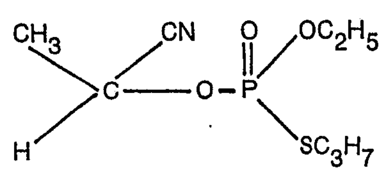 |

In general, the phosphorous esters of this invention can be conveniently prepared utilizing appropriate aldehydes and ketones as starting materials. These are converted to their corresponding cyanohydrins (1—4) and then reacted with a phosphorylating group as shown below.

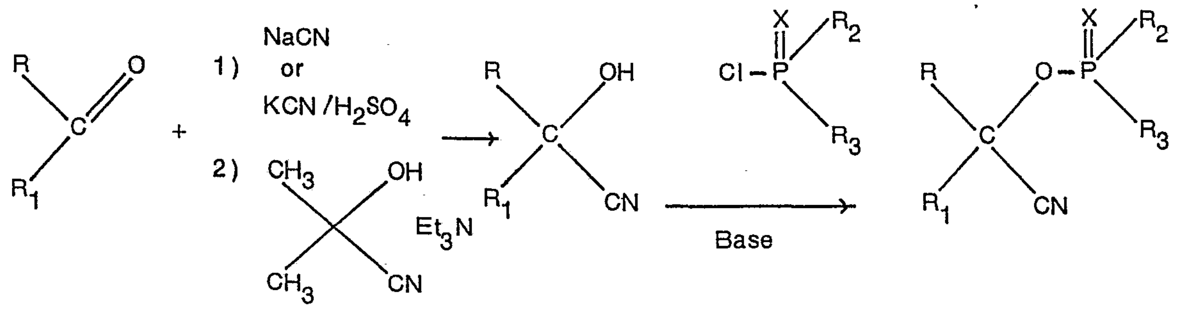


C D E

3) a. $Me_3SiCN$
b. HCl

4) HCN (liq)

wherein the values of X, R, $R_1$, $R_2$ and $R_3$ are as indicatsd previously.

According to the above scheme, the aldehyde or ketone (C) can be converted to cyanohydrin (D) using one of the four methods listed or variations thereof. The choice of which method is used is dependent upon the substituents R and $R_1$.

Conversion of C→D using methods 1, 2, and 3 are detailed in Examples I, II and III.

Conversion of D→E occurs by reacting one equivalent of cyanohydrin with an appropriate chloro phosphorus compound in the presence of at least one equivalent of an acid acceptor, preferably in an inert solvent.

The acid acceptor utilized in this reaction scheme (D→E) can be either an organic or inorganic base. Illustrative of organic bases that are useful acid acceptors are tertiary amines, such as triethylamine, 4-N,N-dimethylamino pyridine, pyridine, trimethyl amine, collidine or 1,4-diazobicyco [2.2.2] octane; bases such as sodium carbonate and potassium carbonate are illustrative of inorganic bases that are useful acid acceptors.

In general, any organic solvent that is inert to the reactants or reaction conditions may be employed in the reaction scheme shown above. Illustrative of organic solvents which are generally suitable for use in conducting these reactions are saturated, unsaturated and aromatic hydrocarbons, e.g. hexane, cyclohexane, octane, cyclohexene, dodecane, naptha, decalin, kerosene, cyclopentane, benzene, toluene, xylene, napthlene others such as dioxane, tetrahydrofuran, diethyl ether, 1,2-dimethyoxybenzene, the dialkyl ethers of ethylene glycol, or propylene glycol or chlorinated aliphatic hydrocarbons, as for example, chloroform, dichloromethane 1,1-dichloroethane, carbon tetrachloride, are also acceptable.

The reaction sequence D→E may also be conducted in a solvent which functions as an acid acceptor. Illustrative of such multifunctional solvents are N,N-dimethylaniline, pyridine, collodine or any like aromatic or heterocyclic tertiary amine compound.

The reaction sequence (C→D→E) can be conducted over a broad temperature and pressure range to yield the desired products, preferably, these reactions are conducted at a temperature of −40°C to 60°C and at atmospheric or autogeneous pressure.

The phosphorous halides utilized as reactants in the scheme D→E generally are known materials which can be obtained from commercial sources or prepared in accordance with conventional methods known to those skilled in the art.

The following pesticidally active compounds are illustrative of compounds within the purview of the above generic formula and which can be conveniently prepared by the process of this invention simply by selecting appropriate reactants for use in the procedures described below.

O-(1-cyanoethyl)-O-ethyl-S-n-propylthiophosphate.
O-(2,2,2-trichloro-1-cyanoethyl)-O-ethyl-S-n-propylthiophosphate.
O-(2-methyl-1-cyanopropyl)-O-ethyl-S-n-propylthiophosphate.
O-(2,2-dimethyl-1-cyanopropyl)-O-ethyl-S-n-propylthiophosphate.
O-(2-cyano-2-propyl)-O-ethyl-S-n-propylthiophosphate.
O-(1,1,1-trichloro-2-cyano-2-propyl)-O-ethyl-S-n-propylthiophosphate.
O-(1,1,1-trichloro-2-cyano-2-propyl)-O-ethyl-N-isopropyl phosphoroamidate.
O-(1,1,1-trifluoro-2-cyano-2-propyl)-O-ethyl-S-n-propylthiophosphate.
O-(1,1,1,3,3,3-hexachloro-2-cyano-2-propyl)-O-ethyl-S-n-propylthiophosphate.
O-(1,1,3-trichloro-1,3,3-trifluoro-2-cyano-2-propyl-O-ethyl-S-n-propylthiophosphate.
O-(2-cyano-2-butyl)-O-ethyl-S-n-propylthiophosphate.

O-(1-cyano-1-cyclopropylethyl)-O-ethyl-S-n-propylthiophosphate.
O-(5-chloro-2-cyano-2-pentyl)-O-ethyl-S-n-propylthiophosphate.
O-(1-cyanohexyl)-O-ethyl-S-n-propylthiophosphate.
O-(1-cyanooctyl)-O-ethyl-S-n-propylthiophosphate.
O-(3-methoxy-1-cyanobutyl)-O-ethyl-S-n-propylthiophosphate.
O-(1-cyanocyclohexyl)-O-ethyl-S-n-propylthiophosphate.
O-(1-cyanocyclohexyl)-O-ethyl-S-n-propylphosphorodithioate.
O-(α-cyanobenzyl)-O-ethyl-S-n-propylthiophosphate.
O-(α-cyanobenzyl)-O-ethyl-S-n-butylthiophosphate.
O-(α-cyanobenzyl)-O-ethyl-S-n-propylphosphorodithioate.
O-(α-cyano-2-chlorobenzyl)-O-ethyl-S-n-propylthiophosphate.
O-(α-cyano-2-allyloxybenzyl)-O-ethyl-S-n-propylthiophosphate.
O-(α-cyano-2-methylbenzyl)-O-ethyl-S-n-propylthiophosphate.
O-(α-cyano-2-nitrobenzyl)-O-ethyl-S-n-propylthiophosphate.
O-(α-cyano-3-fluorobenzyl)-O-ethyl-S-n-propylthiophosphate.
O-(α-cyano-3-trifluoromethylbenzyl)-O-ethyl-S-n-propylthiophosphate.
O-(α-cyano-4-chlorobenzyl)-O-ethyl-S-n-propylthiophosphate.
O-(α-cyano-2,4-dichlorobenzyl)-O-ethyl-S-n-propylthiophosphate.
O-(α-cyano-2,6-dichlorobenzyl)-O-ethyl-S-n-propylthiophosphate.
O-(α-cyano-3-nitro-2,6-dichlorobenzyl)-O-ethyl-S-n-propylthiophosphate.
O-(α-cyano-2,3,4,5,6-pentafluorobenzyl)-O-ethyl-S-n-propylthiophosphate.
O-(2,4-dichloro-α-cyano-α-methylbenzyl)-O-ethyl-S-n-propylthiophosphate.
O-(α-cyano-2-pyridylmethyl)-O-ethyl-S-n-propylthiophosphate.
O-(α-cyano-6-methyl-2-pyridylmethyl)-O-ethyl-S-n-propylthiophosphate.
O-[1-cyano-1-(2-pyridyl)ethyl]-O-ethyl-S-n-propylthiophosphate.
O-(α-cyano-3-phenoxybenzyl)-O-ethyl-S-n-propylthiophosphate.
O-(α-cyano-3-phenoxybenzyl)-O-ethyl-S-isopropylthiophosphate.
O-(α-cyano-3-phenoxybenzyl)-O-ethyl-S-n-propylphosphordithioate.
O-(α-cyano-3-(4′-chlorophenoxybenzyl)-O-ethyl-S-n-propylthiophosphate.
O-[α-cyano-6-(2,4-dichlorophenoxy)-2-pyridylmethyl]-O-ethyl-S-n-propylthiophosphate.
O-(8-cyano-8-pentadecyl)-O-ethyl-S-n-propylthiophosphate.
O-(5-cyano-5-tridecyl)-O-ethyl-S-n-propylthiophosphate.
O-(3-cyano-3-dodecyl)-O-ethyl-S-n-propylthiophosphate.
O-(5-ethoxy-3-cyano-3-pentyl)-O-ethyl-S-n-propylthiophosphate.
O-(1-cyano-3-methylcyclohexyl-O-ethyl-S-n-propylthiophosphate.
O-(α-cyano-2,4,6-trimethoxybenzyl)-O-ethyl-S-n-propylthiophosphate.
O-[α-cyano-3-(4′-tertbutylphenoxy)benzyl]-O-ethyl-S-n-propylthiophosphate.
O-(α-cyano-4-phenoxybenzyl)-O-ethyl-S-n-propylthiophosphate.
O-(α-cyano-4-phenylbenzyl)-O-ethyl-S-n-propylthiophosphate.

The following examples will illustrate the present invention.

Example 1

Preparation of O-(α-cyanobenzyl)-O-ethyl-S-n-propylthiophosphate

A 500 ml four-neck round bottom flask was equipped with a magnetic stirring bar, water condenser, addition funnel and drying tube. The glassware was dried and to this was charged 21.2 g (0.2 mole) benzaldehyde and 19.5 g (0.3 mole) potassium cyanide dissolved in 70 ml of water. The reaction flask was cooled to 10—15°C using a water/ice bath. To this was added 70 ml of 40% sulfuric acid over a 60 minute period. After the addition was complete, the reaction was allowed to warm to room temperature and stir for an additional two hours. At the end of this time the reaction mixture was extracted with carbon tetrachloride (3×75 ml), washed the combined carbon tetrachloride layers with water (2×50 ml), dried the carbon tetrachloride layer with anhydrous magnesium sulfate, filtered and concentrated to yield benzaldehyde cyanohydrin.

To a 100 ml two-neck round bottom flask equipped with thermometer, water condenser and drying tube, magnetic stirring bar and heating mantel, was charged 5.0 g (0.0376 mole) benzaldehyde cyanohydrin, 3.4 g (0.043 mole) pyridine and 40 ml acetonitrile. The contents were then stirred for two hours at room temperature at which time 7.6 g (0.0376 mole) of O-ethyl-S-n-propyl phosphorochloridate was added. The mixture was then stirred overnight at room temperature.

The following day a TLC taken of the crude reaction mixture showed that the reaction had not gone to completion. 3.4 g of (0.043 mole) of pyridine was added to the flask and the reaction mixture heated to 40°C for four hours at which time the acetonitrile was removed under vacuum and the residue taken up in 400 ml of ethyl ether and washed with water (2×100 ml). The ether layer is then dried with anhydrous magnesium sulfate, filtered and concentrated under vacuum. The resulting residue is then purified by means of a low pressure liquid chromatography column to yield 2,4 g. of the desired product as an oil. ($n_D^{23}$ 1.5118).

| | | |
|---|---|---|
| Calcd for $C_{13}H_{18}NO_3PS$: | C, 52.16; | H, 6.06 |
| Found: | C, 52.26; | H, 6.05 |

Example 2

Preparation of O-(α-cyano-2,3,4,5,6-pentafluorobenzyl)-O-ethyl-S-n-propylthiophosphate.

A 100 ml round bottom flask fitted with thermometer, water condenser with drying tube and magnetic stirring bar has charged into it 2.8 g (.033 mole) acetone cyanohydrin, 3 drops triethylamine and 50 ml carbon tetrachloride. The reaction mixture is cooled to 0°C using a water/ice bath. 5.9 g (.03 mole) of pentafluorobenzaldehyde is added to the reaction mixture at a rate which allows the temperature to be maintained between 5—15°C. After all the aldehyde is added the reaction is brought up to room temperature and stirred overnight.

The reaction is cooled to 15°C (water/ice bath) and 2.4 g (.03 mole) pyridine is added followed by the addition of 6.0 g (.03 mole) O-ethyl-S-n-propyl phosphoro chloridate while maintaining a temperature of less than 20°C. After the chloride is added the reaction is brought to room temperature and stirred overnight.

Additional carbon tetrachloride is added to the reaction mixture and then the mixture is washed several times with water, dried over anhydrous magnesium sulfate, filtered and concentrated. The residue is then purified by means of a low pressure liquid chromatography column to yield 1.0 g of the desired product as an oil ($n_D^{21}$ 1.4720).

| | | |
|---|---|---|
| Calcd for $C_{13}H_{13}F_5NO_3PS$: | C, 40.11; | H, 3.37 |
| Found: | C, 40.63; | H, 3.15 |

Example 3

Preparation of O-(α-cyano-4-isopropylbenzyl)-O-ethyl-S-n-propylthiophosphate

A 100 ml round bottom flask fitted with thermometer, water condenser with drying tube and magnetic stirring bar has charged into it 6.0 g (.0405 mole) 4-isopropylbenzaldehyde, 4.8 g (.0486 mole) trimethylsilyl cyanide, 50 ml methylene chloride and a catalytic amount of triphenyl phosphine and zinc chloride. The material was stirred overnight at room temperature and then transferred to a 250 ml flask at which time 60 ml of 3N hydrochloric acid was added and the mixture stirred for three hours at room temperature. The material was taken up in ethyl ether, dried over anhydrous magnesium sulfate, filtered and concentrated in vacuum.

To 7.2 g (.041 mole) of the above concentrate dissolved in 50 ml of ethyl ether was added 8.3 g (.041 mole) O-ethyl-S-n-propyl phosphorochloridate at 10°C. To this mixture was added 3.6 g (.045 mole) pyridine while maintaining temperature below 20°C. After the addition of pyridine was complete the reaction was allowed to warm to room temperature and stir over the weekend.

Work-up consisted of filtering off solid (amine salt), washing the ether layer with water, drying the ether layer with anhydrous magnesium sulfate, filtering and concentrating in vacuum. The resulting residue is purified by means of a low pressure liquid chromatography column to yield 1.7 g of the desired product as an oil ($n_D^{23}$ 1.5055).

| | | |
|---|---|---|
| Calcd for $C_{16}H_{24}NO_3PS$: | C, 59.81; | H, 7.48 |
| Found: | C, 59.58; | H, 7.44 |

Examples 4—44 illustrate other compounds of the present invention which were prepared by methods detailed in this invention.

TABLE I

| Example | Nomenclature | Refractive index (°C) | Molecular formula | Calculated (%) C | Calculated (%) H | Found (%) C | Found (%) H |
|---|---|---|---|---|---|---|---|
| 4 | O-(1-Cyanoethyl)-O-ethyl-S-propylthiophosphate | 1.4640 (23) | $C_8H_{16}NO_3PS$ | 40.50 | 6.75 | 39.16 | 6.93 |
| 5 | O-(2,2,2-Trichloro-1-cyanoethyl)-O-ethyl-S-propylthiophosphate | 1.4940 (23) | $C_8H_{13}Cl_3NO_3PS$ | 28.21 | 3.85 | 26.82 | 3.65 |
| 6 | O-(2-Methyl-1-cyanopropyl)-O-ethyl-S-propylthiophosphate | 1.4630 (23) | $C_{10}H_{20}NO_3PS$ | 45.27 | 7.60 | 47.21 | 7.83 |
| 7 | O-(2,2-Dimethyl-1-cyanopropyl)-O-ethyl-S-propylthiophosphate | 1.4500 (25) | $C_{11}H_{22}NO_3PS$ | 47.29 | 7.94 | 47.32 | 8.23 |
| 8 | O-(2-cyano-2-propyl-O-ethyl-S-propylthiophosphate | 1.4580 (23) | $C_9H_{18}NO_3PS$ | 43.02 | 7.22 | 44.20 | 7.41 |
| 9 | O-(1,1,1-Trichloro-2-cyano-2-propyl)-O-ethyl-S-propylthiophosphate | — | $C_9H_{15}Cl_3NO_3PS$ | 30.48 | 4.26 | 30.08 | 4.07 |
| 10 | O-(1,1,1-Trichloro-2-cyano-2-propyl)-O-ethyl-N-isopropylphosphoroamidate | 1.4755 (23) | $C_9H_{16}Cl_3N_2O_3P$ | 32.02 | 4.78 | 33.07 | 5.05 |
| 11 | O-(1-Cyanocyclohexyl)-O-ethyl-S-propylphosphorodithioate | 1.4362 (25) | $C_{12}H_{22}NO_2PS_2$ | | | | |
| 12 | O-(1,1,3-Trichloro-1,3,3-trifluoro-2-cyano-2-propyl)-O-ethyl-S-propylthiophosphate | — | $C_9H_{12}Cl_3F_3NO_3PS$ | 26.45 | 2.96 | 27.05 | 3.18 |
| 13 | O-(2-Cyano-2-butyl)-O-ethyl-S-propylthiophosphate | — | $C_{10}H_{20}NO_3PS$ | 45.27 | 7.60 | Residue (50% Pure) | |
| 14 | O-(5-Chloro-2-cyano-2-pentyl)-O-ethyl-S-propylthiophosphate | — | $C_{11}H_{21}ClNO_3PS$ | 42.10 | 6.75 | Residue (80% Pure) | |
| 15 | O-(1-Cyanohexyl)-O-ethyl-S-propylthiophosphate | 1.4610 (22) | $C_{12}H_{24}NO_3PS$ | 49.13 | 8.25 | 47.60 | 8.10 |
| 16 | O-(1-Cyanooctyl-O-ethyl-S-propylthiophosphate | 1.4645 (21) | $C_{14}H_{28}NO_3PS$ | | | | |

TABLE I (contd.)

| Example | Nomenclature | Refractive index (°C) | Molecular formula | Calculated (%) C | Calculated (%) H | Found (%) C | Found (%) H |
|---|---|---|---|---|---|---|---|
| 17 | O-(3-Methoxy-1-cyanobutyl)-O-ethyl-S-propylthiophosphate | 1.4615 (21) | $C_{11}H_{27}NO_4PS$ | 44.75 | 7.46 | 45.19 | 7.37 |
| 18 | O-(α-Cyanobenzyl)-O-ethyl-S-butylthiophosphate | 1.5105 (25) | $C_{14}H_{20}NO_3PS$ | 53.66 | 6.43 | 52.44 | 6.61 |
| 19 | O-(α-Cyanobenzyl)-O-ethyl-S-propylphosphorodithioate | 1.5415 (22) | $C_{13}H_{18}NO_2PS_2$ | 49.50 | 5.75 | 48.48 | 5.94 |
| 20 | O-(α-Cyano-2-nitrobenzyl)-O-ethyl-S-propylthiophosphate | 1.5348 (24) | $C_{13}H_{17}N_2O_5PS$ | 45.34 | 4.98 | 46.57 | 4.90 |
| 21 | O-(α-Cyano-3-fluorobenzyl)-O-ethyl-S-propylthiophosphate | 1.5090 (23) | $C_{13}H_{17}F\ NO_3PS$ | 49.20 | 5.40 | 50.39 | 5.24 |
| 22 | O-(α-Cyano-3-trifluoromethylbenzyl)-O-ethyl-S-propylthiophosphate | 1.4785 (24) | $C_{14}H_{17}F_3NO_3PS$ | 45.77 | 4.67 | 46.64 | 4.57 |
| 23 | O-(α-Cyano-4-chlorobenzyl)-O-ethyl-S-propylthiophosphate | — | $C_{13}H_{17}ClNO_3PS$ | 46.78 | 5.14 | 47.05 | 5.07 |
| 24 | O-(α-Cyano-2,4-dichlorobenzyl)-O-ethyl-S-propylthiophosphate | 1.5412 (22) | $C_{13}H_{16}Cl_2NO_3PS$ | 42.40 | 4.38 | 43.65 | 3.94 |
| 25 | O-(α-Cyano-2,6-dichlorobenzyl)-O-ethyl-S-propylthiophosphate | 1.5370 (21) | $C_{13}H_{16}Cl_2NO_3PS$ | 42.40 | 4.38 | 42.94 | 4.72 |
| 26 | O-(α-Cyano-3-nitro-2,6-dichlorobenzyl)-O-ethyl-S-propylthiophosphate | 1.5550 (21) | $C_{13}H_{15}Cl_2N_2O_5PS$ | 37.78 | 3.66 | 38.10 | 3.24 |
| 27 | O-(2,4-Dichloro-α-cyano-α-methylbenzyl)-O-ethyl-S-propylthiophosphate | 1.5156 (23) | $C_{14}H_{18}Cl_2NO_3PS$ | 43.99 | 4.75 | 41.65 | 4.62 |
| 28 | O-(α-Cyano-2-pyridylmethyl)-O-ethyl-S-propylthiophosphate | — | $C_{12}H_{17}N_2O_3PS$ | 47.99 | 5.71 | 46.27 | 5.74 |
| 29 | O-(α-Cyano-6-methyl-2-pyridylmethyl)-O-ethyl-S-propylthiophosphate | 1.4990 (25) | $C_{13}H_{19}N_2O_3PS$ | 49.67 | 6.09 | 48.10 | 6.47 |
| 30 | O-(α-Cyano-3-phenoxybenzyl)-O-ethyl-S-propylthiophosphate | — | $C_{19}H_{22}NO_4PS$ | 58.30 | 5.67 | 59.02 | 5.69 |

TABLE I (contd.)

| Example | Nomenclature | Refractive index (°C) | Molecular formula | Calculated (%) C | Calculated (%) H | Found (%) C | Found (%) H |
|---|---|---|---|---|---|---|---|
| 31 | O-(α-Cyano-3-phenoxybenzyl)-O-ethyl-S-isopropylthiophosphate | 1.5465 (22) | $C_{19}H_{22}NO_4PS$ | 58.30 | 5.67 | 57.75 | 5.68 |
| 32 | O-(α-Cyano-3-phenoxybenzyl)-O-ethyl-S-propylphosphorodithioate | 1.5595 (24) | $C_{19}H_{22}NO_3PS_2$ | 56.00 | 5.44 | Residue | |
| 33 | O-[α-Cyano-3-(4′-chlorophenoxy)benzyl]-O-ethyl-S-propylthiophosphate | — | $C_{19}H_{21}ClNO_4PS$ | 53.58 | 4.97 | Residue | |
| 34 | O-[α-Cyano-6-(2′,4′-dichlorophenoxy)-2-pyridylmethyl]-O-ethyl-S-propylthiophosphate | 1.5478 (23) | $C_{18}H_{19}Cl_2N_2O_4PS$ | 46.66 | 4.15 | 46.66 | 4.20 |
| 35 | O-(1,1,1-Trifluoro-2-cyano-2-propyl)-O-ethyl-S-propylthiophosphate | 1.4362 (25) | $C_9H_{15}F_3NO_3PS$ | 35.41 | 4.92 | 35.32 | 5.51 |
| 36 | O-(α-Cyano-2-bromobenzyl-O-ethyl-S-propylthiophosphate | 1.5390 (25) | $C_{13}H_{17}BrNO_3PS$ | 41.28 | 4.53 | 41.17 | 4.49 |
| 37 | O-(α-Cyano-3-cyanobenzyl)-O-ethyl-S-propylthiophosphate | 1.5135 (23) | $C_{14}H_{17}N_2O_3PS$ | 51.24 | 5.28 | 51.70 | 5.68 |
| 38 | O-[α-Cyano-3-(benzyloxy)benzyl]-O-ethyl-S-propylthiophosphate | 1.5572 (23) | $C_{20}H_{24}NO_4PS$ | 59.24 | 5.97 | 59.92 | 6.04 |
| 39 | O-(α-Cyano-4-phenylbenzyl)-O-ethyl-S-propylthiophosphate | 1.5790 (23) | $C_{19}H_{22}NO_3PS$ | 60.78 | 5.91 | 60.73 | 5.95 |
| 40 | O-(α-Cyano-4-fluorobenzyl)-O-ethyl-S-propylthiophosphate | 1.4870 (23) | $C_{13}H_{17}FNO_3PS$ | 49.21 | 5.36 | 49.59 | 5.82 |
| 41 | O-(α-Cyano-3-nitrobenzyl)-O-ethyl-S-propylthiophosphate | 1.5366 (23) | $C_{13}H_{17}N_2O_5PS$ | 45.34 | 4.98 | 46.72 | 4.76 |
| 42 | O-[α-Cyano-3-(4′-fluorophenoxy)-benzyl]-O-ethyl-S-propylthiophosphate | 1.5392 (23) | $C_{19}H_{21}FNO_4PS$ | 55.73 | 5.13 | 56.33 | 5.27 |
| 43 | O-[α-Cyano-3-(4′-methylphenoxy)benzyl]-O-ethyl-S-propylthiophosphate | 1.5348 (23) | $C_{20}H_{24}NO_4PS$ | 59.26 | 5.93 | 59.54 | 6.11 |
| 44 | O-(α-Cyano-2,3-dichloro-4-methylbenzyl)-O-ethyl-S-propylthiophosphate | 1.5430 (21) | $C_{14}H_{18}Cl_2NO_3PS$ | 49.98 | 4.71 | 44.42 | 4.69 |

Selected species of the new compounds were evaluated to determine their pesticidal activity against mites, nematodes, and certain insects, including an aphid, a caterpillar, a bettle and a fly.

Suspensions of the test compounds were prepared by dissolving 1 g of compound in 50 ml of acetone in which had been dissolved 0.1 g (10 percent of the weight of compound) of an alkylphenoxy polyethoxyethanol surfactant, as an emulsifying or dispersing agent. The resulting solution was mixed into 150 ml of water to give roughly 200 ml of a suspension containing the compound in finely divided form. The thus-prepared stock suspension contained 0.5 percent by weight of compound. The concentrations in parts per million by weight employed in the tests described below were obtained by appropriate dilutions of the stock suspension with water.

Adults and nymphal stages of the bean aphid (*Aphis fabae* Scop.) reared on potted dwarf nasturtium plants at 18.3—21.1°C (65—70°F) and 50±5 percent relative humidity, constituted the test insects. For testing purposes, the number of aphids per pot was standardized to 100—150 by trimming plants containing excess aphids.

The test compounds were formulated by diluting the stock suspension with water to give a suspension containing 500 parts of test compound per million parts of final formulation.

The potted plants (one pot per compound tested) infested with 100—150 aphids, were placed on a revolving turntable and sprayed with 100—110 ml of test compound formulation by use of a DeVilbiss spray gun set at 276 kN/m2 (40 psig) air pressure. This application, which lasted 25 seconds, was sufficient to wet the plants to run-off. As a control 100—110 ml of a water-acetone-emulsifier solution containing no test compound were also sprayed on infested plants. After spraying, the pots were placed on their sides on a sheet of white standard mimeograph paper which had been previously ruled to facilitate counting. Temperature and humidity in the test room during the 24 hour holding period were 18.3—21.1°C (65—70°F) and 50±5 percent, respectively. Aphids which fell onto the paper and were unable to remain standing after being uprighted were considered dead. Aphids remaining on the plants were observed closely for movement and those which were unable to move the length of the body upon stimulation by prodding were considered dead.

Third instar larvae of the southern armyworm (*Spodoptera eridania*, (Cram.)), reared on Tendergreen bean plants at a temperature of 26.7±2.8°C (80±5°F) and a relative humidity of 50±5 percent, constituted the test insects.

The test compounds were formulated by diluting the stock suspension with water to give a suspension containing 500 parts of test compound per million parts of final formulation. Potted Tendergreen bean plants of standard height and age were placed on a revolving turntable and sprayed with 100—110 ml of test compound formulation by use of a DeVilbiss spray gun set at 276 $kN/m^2$ (40 psig) air pressure. This application, which lasted 25 seconds, was sufficient to wet plants to run-off. As a control 100—110 ml of a water-acetone-emulsifier solution containing no test compound were also sprayed on plants. When dry, the paired leaves were separated and each one was placed in a 90 mm Petri dish lined with moistened filter paper. Five randomly selected larvae were introduced into each dish and the dishes were closed. The closed dishes were labelled and held at 26.7—29.5°C (80—85°F) for three days. Although the larvae could easily consume the whole leaf within twenty-four hours, no more food was added. Larvae which were unable to move the length of the body, even upon stimulation by prodding, were considered dead.

Third instar larvae of the Mexican bean beetle (*Epilachna varivestis*, Muls.), reared on Tendergreen bean plants at a temperature of 26.7±2.8°C (80±5°F) and 50±5 percent relative humidity, were the test insects.

The test compounds were formulated by diluting the stock suspension with water to give a suspension containing 500 parts of test compound per million parts of final formulation. Potted Tendergreen bean plants of standard height and age were placed on a revolving turntable and sprayed with 100—110 ml of test compound formulation by use of a DeVilbiss spray gun set at 276 $kN/m^2$ (40 psig) air pressure. This application, which lasted 25 seconds, was sufficient to wet plants to run-off. As a control, 100—110 ml of a water-acetone-emulsifier solution containing no test compound were also sprayed on plants. When dry, the paired leaves were separated and each was placed in a 90 mm Petri dish lined with moistened filter paper. Five randomly selected larvae were introduced into each dish, and the dishes were closed. The closed dishes were labelled and held at a temperature of 26.7±2.8°C (80±5°F) for three days. Although the larvae could easily consume the leaf within 24 to 48 hours, no more food was added. Larvae which were unable to move the length of the body, even upon stimulation, were considered dead.

Four to six day old adult house flies (*Musca domestica*, L.), reared according to the specifications of the Chemical Specialties Manufacturing Association (Blue Book, McNair-Dorland Co., N.Y. 1954; pages 243—244, 261) under controlled conditions of 26.7±2.8°C (80±5°F) and 50±5 percent relative humidity, were the test insects. The flies were immobilized by anesthetizing with carbon dioxide and twenty five immobilized individuals, males and females, were transferred to a cage consisting of a standard food strainer about 0.127 m (five inches) in diameter which was inverted over a wrapping-paper-covered surface. The test compounds were formulated by diluting the stock suspension with a 10 percent (by weight) sugar solution to give a suspension containing 500 parts of test compound per million parts of final formulation, by weight. 10 ml of the test formulation were added to a souffle cup containing a 0.024 m (one-inch) square of an absorbent cotton pad. This bait cup was introduced and centered on the blotting paper under the food strainer prior to admitting the anesthetized flies. The caged flies were allowed to feed

on the bait for twenty four hours, at a temperature of 26.7±2.8°C (80±5°F) and the relative humidity of 50±5 percent. Flies which showed no sign of movement on prodding were considered dead.

Adults and nymphal stages of the two-spotted mite (*Tetranychus urticae* Koch), reared on Tendergreen bean plants at 26.7±2.8°C (80±5°F) and 50±5 percent relative humidity were the test organisms. Infested leaves from a stock culture were placed on the primary leaves of two bean plants 0.15—0.2 m, (six to eight inches) in height, growing in a 0.063 m (two-and-a-half inch) clay pot. 150—200 Mites, a sufficient number for testing, transferred from the excised leaves to the fresh plants in a period of twenty-four hours. Following the twenty-four hour transfer period, the excised leaves were removed from the infested plants. The test compounds were formulated by diluting the stock suspension with water to give a suspension containing 500 parts of test compound per million parts of final formulation. The potted plants (one pot per compound) were placed on a revolving turntable and sprayed with 100—110 ml of test compound formulation by use of a DeVilbiss spray gun set at 276 kN/m$^2$ (40 psig) air pressure. This application, which lasted 25 seconds was sufficient to wet the plants to run-off. As a control 100—110 ml of water solution containing acetone and emulsifier in the same concentration as the test compound formulation, but containing no test compound, were also sprayed on infested plants. The sprayed plants were held at 26.7±2.8°C (80±5°F) and 50±5 percent relative humidity for six days, after which a mortality count of motile forms were made. Microscopic examination for motile forms was made on the leaves of the test plants. Any individual which was capable of locomotion upon prodding was considered living.

Infective migratory larvae of the root-knot nematode, *Meloidogyne incognita* ver. *acrita*, reared in the greenhouse on roots of tomato (Florida M-1) and cucumber (National pickling), constituted the test organism. This particular nematode incites distinct galls or knots on the roots of certain plants. Infected roots, containing egg masses, were removed from the stock culture and cleaned of soil by shaking and washing with tap water. Roots were finely chopped, then vigorously shaken in a 0.5 percent NaOCl solution for 4 minutes. To separate the nematode eggs from root tissue, the mixture was poured through a 32-mesh sieve nestled in a 500-mesh sieve followed by a gentle stream of water to remove any trace of NaOCl. The trapped eggs were rinsed with water into a 50 ml beaker. Samples of the egg suspension were counted with the aid of a stereoscopic microscope. 4000 to 6000 eggs were added to a series of 0.57 l (1 pint) mason jars, each containing 180 cm$^3$ of soil. The jars were capped and mixed thoroughly to ensure uniform infestation of the soil. The test compounds were formulated by diluting the stock suspension with water to give a suspension containing 3.3 mg of test compound per 10 ml of final formulation which when added to the jar of soil was approximately equal to a rate of 28 kilogram of test compound per 0.4 hectares (per acre). Following addition of formulation, the jars were tightly capped, and the contents were thoroughly mixed on a ball mill for five minutes. The jars remained capped for 48 hours after which the contents were transferred to 0.076 m (three inch) diameter pots. The soil was then planted with cucumber seeds, and since cucumber is susceptible to root-knot nematode attack, it served as an indicator crop. The pots were then placed in a greenhouse. After 4—6 weeks, the cucumber plants were removed from the pots, the roots were washed free of adhering soil, and directly compared with the roots of similar plants grown in infested but untreated soil. The averaged degree of gall formation on the roots of the cucumber plants was the basis for ascertaining nematode control.

The results of these tests are set forth in Table II below. In these tests the pesticidal activity of the compounds at the indicated dosage rate against aphid, mite, Southern Armyworm, Bean Beetle, house fly and root-knot nematode was rated as follows:

A=excellent control
B=partial control
C=no control

Dashes indicate no test conducted.

TABLE II

| Example | Bean aphid | Mite adult | Mite egg | Southern army worm | Mexican bean beetle | House fly | Root-knot nematode |
|---|---|---|---|---|---|---|---|
| 1 | A | A | C | A | C | A | A |
| 2 | A | A | C | A | C | A | — |
| 3 | A | A | C | A | C | A | — |
| 4 | A | A | C | A | A | A | A |
| 5 | C | C | C | C | C | C | — |
| 6 | A | A | C | A | A | A | A |
| 7 | B | C | C | C | C | B | A |

TABLE II (continued)

| Example | Bean aphid | Mite adult | Mite egg | Southern army worm | Mexican bean beetle | House fly | Root-knot nematode |
|---|---|---|---|---|---|---|---|
| 8 | A | A | C | A | B | A | A |
| 9 | A | A | C | A | A | A | — |
| 10 | C | C | C | A | C | A | — |
| 11 | C | C | C | C | C | C | — |
| 12 | C | C | C | C | C | A | — |
| 13 | A | A | C | A | C | A | A |
| 14 | A | A | C | A | C | A | — |
| 15 | A | A | C | A | A | A | — |
| 16 | A | A | C | A | C | A | A |
| 17 | A | A | C | B | B | A | — |
| 18 | A | A | C | C | C | A | — |
| 19 | A | A | C | A | C | A | — |
| 20 | A | A | C | A | C | A | — |
| 21 | A | A | C | A | C | A | — |
| 22 | A | A | C | A | C | A | — |
| 23 | A | A | C | A | C | A | — |
| 24 | A | A | B | A | C | A | — |
| 25 | A | A | A | A | A | A | — |
| 26 | A | A | A | A | C | A | — |
| 27 | C | A | C | C | C | C | — |
| 28 | A | A | C | C | C | A | — |
| 29 | A | A | A | A | B | A | — |
| 30 | A | A | A | A | A | A | — |
| 31 | C | A | C | A | B | B | — |
| 32 | C | C | C | C | C | C | — |
| 33 | A | A | A | A | A | A | — |
| 34 | A | A | B | A | A | A | — |
| 35 | A | C | C | C | C | A | — |
| 36 | A | A | C | A | C | A | — |
| 37 | A | A | A | A | C | A | — |

TABLE II (continued)

| Example | Bean aphid | Mite adult | Mite egg | Southern army worm | Mexican bean beetle | House fly | Root-knot nematode |
|---|---|---|---|---|---|---|---|
| 38 | A | A | A | A | A | A | — |
| 39 | A | A | C | A | A | A | — |
| 40 | A | A | C | A | C | A | — |
| 41 | A | A | A | A | B | A | — |
| 42 | A | A | C | A | A | A | — |
| 43 | A | A | A | A | C | A | — |
| 44 | A | A | C | A | C | A | — |

It will be understood that the pest species employed in the above tests are merely representative of a wide variety of plant pests that can be controlled by the use of the compounds of this invention. The compounds contemplated in this invention may be applied as mite ovicides and miticides according to methods known to those skilled in the art. Moreover it has been found that the compounds of the instant invention are useful as fumigants for grain insects, have soil insecticidal activity against the corn root worm, and also possess systemic activity. Pesticidal compositions containing the compounds as the active toxicant will usually comprise a carrier and/or diluent, either liquid or solid.

Suitable liquid diluents or carriers include water, petroleum distillates, or other liquid carriers with or without surface active agents. Liquid concentrates may be prepared by dissolving one of these compounds with a nonphytotoxic solvent such as acetone, xylene, or nitrobenzene and dispersing the toxicants in water with the aid of suitable surface active emulsifying and dispersing agents.

The choice of dispersing and emulsifying agents and the amount employed is dictated by the nature of the composition and the ability of the agent to facilitate the dispersion of the toxicant. Generally, it is desirable to use as little of the agent as is possible, consistent with the desired dispersion of the toxicant in the spray so that rain does not re-emulsify the toxicant after it is applied to the plant and wash it off the plant. Nonionic, anionic, amphoteric or cationic dispersing and emulsifying agents may be employed; for example, the condensation products of alkylene oxides with phenol and organic acids, alkyl aryl sulfonates, complex ether alcohols, and quaternary ammonium compounds.

In the preparation of wettable powder or dust or granulated compositions, the active ingredient is dispersed in and on an appropriately divided solid carrier such as clay, talc, bentonite, diatomaceous earth, and fullers earth. In the formulation of the wettable powders the aforementioned dispersing agents as well as lignosulfonates can be included.

The required amount of the toxicants contemplated herein may be applied from in 11.2 to 2245 litres per hectare (1 to 200 gallons per acre) treated or more of liquid carrier and/or diluent or in from 5.6 to 560 kg (5 to 500 pounds) of inert solid carrier and/or diluent. The concentration in the liquid concentrate will usually vary from 10 to 95 percent by weight and in the solid formulations from 0.5 to 90 percent by weight. Satisfactory sprays, dusts, or granules for general use contain from 0.28 to 16.8 kg per hectare (1/4 to 15 pounds per acre) of active toxicant.

The pesticides contemplated herein prevent attack by insects, mites and nematodes upon plants or other material to which the pesticides are applied, and they have relatively high residual toxicity. With respect to plants, they have a high margin of safety in that when used in sufficient amount to kill or repel the insects, they do not burn or injure the plant, and they resist weathering which includes wash-off caused by rain, decomposition by ultraviolet light, oxidation, or hydrolysis in the presence of moisture or, at least such decomposition, oxidation, and hydrolysis as would materially decrease the desirable pesticidal characteristic of the toxicants or impart undesirable characteristic for instance, phytotoxicity, to the toxicants. The toxicants are so chemically inert that they are compatible with substantially any other constituents of the spray schedule, and they may be used in the soil, upon the seeds, or the roots of plants without injuring either the seeds or roots of plants. They may also be used in combination with other pesticidally active compounds. When used as miticides they will normally be applied to the foliage of the plants to be treated. It will be appreciated that the compounds of this invention can also be used in combination with other biologically active compounds.

**Claims**

1. A phosphorous ester of a cyanohydrin of the general formula:

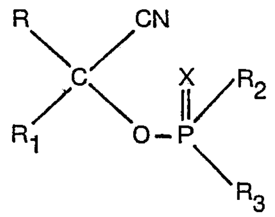

wherein X is O or S;

R and $R_1$ are the same or different and are independently hydrogen, $C_1$—$C_{15}$ alkyl, whereby $C_3$—$C_{15}$ can be branched or unbranched, and wherein the alkyl group can be substituted with alkylthio, alkoxy, one or more halo; $C_3$—$C_8$ cycloalkyl, alkenyl, phenyl, benzyl, pyridinyl, pyrimidinyl, furyl, pyranyl, naphthyl, or thienyl, all of which may be optionally substituted with one or more halogen, nitro, cyano, allyloxy, trihalomethyl, alkyl, alkylthio, alkoxy, aryloxy, or aryloxyalkyl, which can be further substituted with alkoxy, halogen, alkyl, or trihalomethyl groups; or taken together R and $R_1$ may form a 5 or 6 membered carbocyclic ring;

$R_2$ and $R_3$ can be the same or different and are independently $C_1$—$C_8$ alkylthio, $C_1$—$C_8$ alkoxy, or $C_1$—$C_8$ alkyl amino with the proviso that $R_2$ and $R_3$ may not be alkoxy at the same time.

2. An ester as claimed in claim 1 wherein X is O.

3. A ester as claimed in claim 2 wherein R and $R_1$ are the same or different and are independently hydrogen, $C_1$—$C_6$ alkyl, or phenyl substituted with aryloxy, which aryloxy group is further substituted with halogen.

4. O-(α-Cyanobenzyl)-O-ethyl-S-n-propylthiophosphate.

5. O-(2-Cyano-2-propyl)-O-ethyl-S-n-propylthiophosphate.

6. O-(2-Methyl-1-cyanopropyl)-O-ethyl-S-n-propylthiophosphate.

7. O-[α-Cyano-3-(2′,4′-dichlorophenoxy)-benzyl]-O-ethyl-S-n-propylthiophosphate.

8. O-(1-Cyanoethyl)-O-ethyl-S-propylthiophosphate.

9. O-(α-cyano-4-phenylbenzyl)-O-ethyl-S-n-propylthiophosphate.

10. A pesticidal composition comprising an acceptable carrier and as the active toxicant a pesticidally effective amount of an ester as claimed in any of the preceding claims.

11. A method of controlling nematodes, insects and mites which comprise subjecting them to a nematocidally, insecticidally or miticidally effective amount of an ester as claimed in any one of claims 1 to 9.

**Patentansprüche**

1. Phosphorsäureester eines Cyanhydrins der allgemeinen Formel

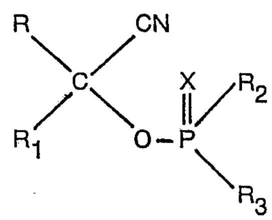

worin X O oder S ist,

R und $R_1$ gleich oder verschieden sind und unabhängig Wasserstoff, $C_1$—$C_{15}$ Alkyl, wobei $C_3$—$C_{15}$ verzweigt oder unverzweigt sein können und worin die Alkylgruppe mit Alkylthio, Alkoxy, einem oder mehreren Halogenatomen substituiert sein kann; $C_3$—$C_8$ Cycloalkyl, Alkenyl, Phenyl, Benzyl, Pyridinyl, Pyrimidinyl, Furyl, Pyranyl, Naphthyl oder Thienyl, die alle wahlweise mit einem oder mehreren Halogen-, Nitro-, Cyan-, Allyloxy-, Trihalogenmethyl-, Alkyl-, Alkylthio-, Alkoxy-, Aryloxy- oder Aryloxyalkylsubstituenten substituiert sein können, die weiter mit Alkoxy-, Halogen-, Alkyl- oder Trihalogenmethylgruppen substituiert sein können; bedeuten; oder R und $R_1$ bilden gemeinsam einen 5- oder 6-gliedrigen carbocyclischen Ring;

$R_2$ und $R_3$ gleich oder verschieden sein können und unabhängig $C_1$—$C_8$ Alkylthio, $C_1$—$C_8$ Alkoxy oder $C_1$—$C_8$ Alkylamino sind, mit der Bedingung, daß $R_2$ und $R_3$ nicht gleichzeitig Alkoxy sein können.

2. Ein Ester gemäß Anspruch 1, in welchem X O ist.

3. Ein Ester gemäß Anspruch 2, in welchem R und $R_1$ gleich oder verschieden sind und unabhängig Wasserstoff, $C_1$—$C_6$ Alkyl oder Phenyl, substituiert mit Aryloxy, sind, wobei die Aryloxygruppe weiter mit Halogen substituiert ist.

4. O-(α-Cyanbenzyl)-O-ethyl-S-n-propylthiophosphat.

5. O-(2-Cyan-2-propyl)-O-ethyl-S-n-propylthiophosphat.

6. O-(2-Methyl-1-cyanopropyl)-O-ethyl-S-n-propylthiophosphat.

7. O-[α-Cyan-3-(2',4'-dichlorphenoxy)-benzyl]-O-ethyl-S-n-propylthiophosphat.

8. O-(1-Cyanethyl)-O-ethyl-S-propylthiophosphat.

9. O-(α-Cyan-4-phenylbenzyl)-O-ethyl-S-n-propylthiophosphat.

10. Pestizide Zubereitung, enthaltend einen annehmbaren Träger und, als aktives toxisches Mittel, eine pestizid wirksame Menge eines Esters nach einem der vorhergehenden Ansprüche.

11. Verfahren zur Bekämpfung von Nematoden, Insekten und Milben, dadurch gekennzeichnet, daß man diese mit einer nematozid, insektizid oder mitizid wirksamen Menge eines Esters nach einem der Ansprüche 1 bis 9 behandelt.

**Revendications**

1. Ester phosphoré d'une cyanhydrine, de formule générale:

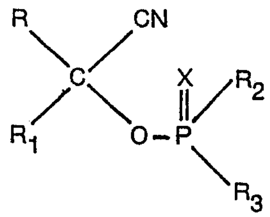

dans laquelle X représente O ou S;

R et $R_1$ sont égaux ou différents et représent indépendamment l'hydrogène, un groupe alkyle ayant 1 à 15 atomes de carbone, dont 3 à 15 peuvent être ramifiés ou non ramifiés, et le groupe alkyle peut être substitué avec un radical alkylthio, alkoxy, un ou plusieurs radicaux halogéno; un groupe cycloalkyle en $C_3$ à $C_8$, alcényle, phényle, benzyle, pyridinyle, pyrimidinyle, furyle, pyrannyle, naphtyle, ou thiényle, tous pouvant éventuellement être substitués avec un ou plusieurs radicaux halogéno, nitro, cyano, allyloxy, trihalogénométhyle, alkyle, alkylthio, alkoxy, aryloxy, ou aryloxyalkyle, qui peuvent en outre être substitués avec des groupes alkoxy, halogéno, alkyle ou trihalogénométhyle; ou bien R et $R_1$ considérés ensemble peuvent former un noyau carbocyclique pentagonal ou hexagonal;

$R_2$ et $R_3$ peuvent être égaux ou différents et représentent indépendamment un groupe alkylthio en $C_1$ à $C_8$, alkoxy en $C_1$ à $C_8$ ou alkylamino en $C_1$ à $C_8$, sous réserve que $R_2$ et $R_3$ ne puissent pas être en même temps un groupe alkoxy.

2. Ester suivant la revendication 1, dans lequel X représente O.

3. Ester suivant la revendication 2, dans lequel R et $R_1$ sont égaux ou différents et représentent indépendamment l'hydrogène, un groupe alkyle en $C_1$ à $C_6$ ou un groupe phényle substitué avec un groupe aryloxy, ce groupe aryloxy étant en outre substitué avec un halogène.

4. Le thiophosphate de O-(α-cyanobenzyle), de O-éthyle et de S-n-propyle.

5. Le thiophosphate de O-(2-cyano-2-propyle), de O-éthyle et de S-n-propyle.

6. Le thiophosphate de O-(2-méthyl-1-cyanopropyle), de O-éthyle et de S-n-propyle.

7. Le thiophosphate de O-[α-cyano-3-(2',4'-dichlorophénoxy)-benzyle], de O-éthyle et de S-n-propyle.

8. Le thiophosphate de O-(1-cyanéthyle), de O-éthyle et de S-propyle.

9. Le thiophosphate de O-(α-cyano-4-phénylbenzyle), de O-éthyle et de S-n-propyle.

10. Composition pesticide, comprenant un support convenable et, comme substance active, une quantité à effet pesticide d'un ester suivant l'une quelconque des revendications précédentes.

11. Procédé pour combattre des nématodes, des insectes et des acariens, qui consiste à les soumettre à l'action d'une quantité efficace du point de vue nématicide, insecticide ou acaricide d'un ester suivant l'une quelconque des revendications 1 à 9.